# EUROPEAN PATENT SPECIFICATION

(11) **EP 2 437 022 B1**
(45) Date of publication and mention of the grant of the patent: **07.03.2018**
(21) Application number: 10460051.5
(22) Date of filing: 23.12.2010
(51) Int. Cl.: F28D 7/10, F28D 7/16, F28F 9/22, F24H 1/28, F24H 8/00, F28F 9/00, F24H 9/00

(54) **Gas-to-liquid pipe heat exchanger, in particular for domestic boiler**
Gas-flüssig Rohr-Wärmetauscher, insbesondere für Heizungsanlage
Échangeur de chaleur de tube pour gas-liquide, notamment pour un chauffage domestique

(30) Priority: 01.10.2010 PL 39256010
(43) Date of publication of application: 04.04.2012
(73) Proprietor: AIC S.A., 81-577 Gdynia (PL)
(72) Inventor: Pacholski, Adam, 81-603 Gdynia (PL)
(74) Representative: Kwapich, Anna

(56) References cited:
- EP-A2- 0 271 434
- WO-A2-2007/048603
- DE-A1- 3 741 798

## Description

An object of this invention is a heat exchanger belonging to the group of pipe exchangers designed to exchange heat between a gas and a liquid. It is to be used in the heat engineering, especially in domestic central heating systems.

Many kinds of pipe heat exchangers are known having different structures depending on a special place of using, fluids circulating in a heat exchange system, as well as special demands and needs. A system of pipe elements in which a hot gas or liquid flows is a common feature of liquid gas pipe heat exchangers, said elements being fastened between two sieve walls and situated in a chamber enclosed in an outer jacket in which heated water or gas circulates. In a case of heat exchangers for domestic central heating systems, in which heat is created by using gas as a fuel, an exchanger is provided with a combustion chamber situated above the upper sieve wall and it has a water inlet as well as a water outlet stub pipes, a gas inlet stub pipe and an exhaust stub pipe. A set of pipe elements is positioned vertically in such exchangers. Heat exchangers are also known used in the heat power engineering, said exchangers named condensers or liquefier are built-up of many sets of pipe elements located in a chamber confined with an outer jacket. Pipes of said exchangers are fastened between a perforated bottoms with water chambers situated behind them, whereas water working as an agent for cooling steam provided from outlets of turbines into a chamber closing said pipes is introduced into said pipes. Pipe elements of different shapes and inner areas, as well as additional elements of different kinds, such as partitions, additional pipes and the like, are used in pipe exchangers of different kinds in order to increase the heat exchange efficiency.

From the Polish patent specification No 186723 a pipe liquid-to-gas heat exchanger is known in which hot gas is introduced into a chamber closed by an outer jacket, said gas being cooled when flowing around pipes fastened between flat sieve bottoms. A cooling agent flows through these pipes, said agent being delivered and carried out through stub pipes situated in a cover of the sieve bottom. Liquefied gas is drained off from the exchanger through an outlet stub pipe situated in an outer jacket surrounding the heat exchange chamber. Additional perforated pipes are also located in this chamber, whereas end parts of said pipes are going through the sieve bottom, and are connected with a collecting pipe which is connected to a vapours offtake pipe. The perforated pipes are used to suck out air from a gas space in the exchanger and to lead it out from the exchanger. Partitions are also located in the exchanger chamber, said partitions being situated crosswise in relation to pipe elements.

From the published international patent application No WO2008/131616 the heat exchanger is also known comprising an outer cylindrical jacket having inlet and outlet stub pipes with a packet of pipe elements located in said jacket, said pipe elements going through a spiral partition and being connected to sieve walls shaped as flat discs well-fitting to the cylindrical outer jacket. Inside the exchanger tie rods are also used, one of which runs along a middle axis of an outer cylindrical jacket. These tie rods are from one side fastened in a sieve wall, and their other ends are fastened in the spiral partition. The tie rods are divided into segments provided with distance pipes. Such an exchanger may also be provided with additional pipes going through the spiral partition without being fastened in the sieve walls, which upgrade stiffness, protect against deformations, and make it easier to match openings in the spiral partition to the exchanger pipes. The construction of this spiral partition is disclosed in detail in the specification.

From the published international patent application No WO2009/078577 the boiler is known comprising a cylindrical casing, a vertical liquid-gas exchanger, a burner located in a combustion chamber of said exchanger, as well as an inlet and outlet of water being heated, an exhaust gas outlet, a gas inlet and an instrumentation enabling air supply and making suitable air-gas mixture, and moreover provided with a control device. This embodiment of a heat exchanger has a set of pipe elements rectangular in their section, said pipe elements being regularly distributed inside an outer jacket forming a chamber through which the heated water flows. Upper ends of these pipes are fastened in a flat upper sieve wall, above which a combustion chamber is located, and their lower ends are connected through a flat lower sieve wall and a combustion gases recycling chamber to a combustion gases outlet channel. Flat partitions shaped as perforated discs are located in the water chamber, and said pipe elements run through said discs. These separating partitions make the heat exchange better because they disturb the water circulation. The partitions are located crosswise to the pipe elements, and their diameter is smaller than the inner diameter of the jacket of the exchanger in order to create between the partitions and the jacket slots through which water flows. These partitions are situated crosswise to the pipe elements, and their diameter is smaller than the inner diameter of the jacket of the exchanger so that water flow slots are created. An impact of the width of said slots onto the water circulation and the water pressure acting onto partitions is discussed in the said specification. The described solution proposes to provide said partitions with circulation pipes protecting against a greater water pressure acting onto said partitions, the upper ends of said pipes being fastened in the highest partition, and the lower ends being fastened in the lowest partition. A structure variant is also shown in which walls of pipe elements are situated in a distance from edges of openings in those partitions through which they are going, what makes the water flow disturbances greater and improves the heat exchange efficiency. The described boiler is provided with an additional independent water circuit through spiral pipes disposed in the water chamber around the combustion chamber.

Known from the European patent application published under No. EP 0271434 A2 is a boiler comprising an outer jacket, which encases a set of vertically running pipe elements anchored in sieve walls on both ends, a gas combustion chamber positioned over the upper sieve wall and a baffle mounted crosswise to the pipe elements, with openings through which the pipe elements run, plus liquid, gas, and fume inlet and outlet pipe stubs. The upper sieve wall is roof-shaped and a roof edge intersects the axis of a burner. The roof edge runs between the walls of the combustion chamber across the width.

A heat exchanger according to the invention comprising an outer jacket with a set of vertical pipe elements fastened at their ends on both sides in sieve walls, and having a gas combustion chamber located above an upper sieve wall, as well as partitions mounted crosswise pipe elements, said partitions having openings for pipe elements and openings for a flow of water, whereas said heat exchanger is provided with liquid, gas and exhaust fumes inlet and outlet stub pipes, is characterized in that said outer jacket is conical one with its diameter increasing upwards, and an upper sieve wall, as well as an upper partition laying below said wall are shaped as cones with their vertexes pointing down, said upper partition having a central opening in its central part and its outer diameter corresponding to a diameter of the outer jacket.

Advantageously a flare angle of the first cone forming an upper sieve wall is greater than a flare angle of a second cone forming an upper partition.

In the especially advantageous embodiment of the exchanger a flare angle of the second cone forming an upper partition is not smaller than 90°, and not greater than 170°.

In one of embodiments a lower sieve wall is shaped as a cone having its vertex directed downwards.

Cones of the upper and lower sieve wall have the same flare angles.

In an advantageous embodiment of the invention the successive partitions have alternately an outer diameter corresponding to the diameter of the outer jacket and smaller than a diameter of the outer jacket, whereas the partitions having an outer diameter corresponding a diameter of the outer jacket have a central opening in their central part.

In the most advantageous embodiment of the exchanger its upper partition has evenly distributed additional openings.

These additional openings are distributed on one circle or on many concentric circles.

The solution according to the invention is advantageous because it essentially increases the effectiveness of heat exchange processes on the whole height of pipe elements in an exchanger, as well as in an area of an upper sieve wall and a combustion chamber.

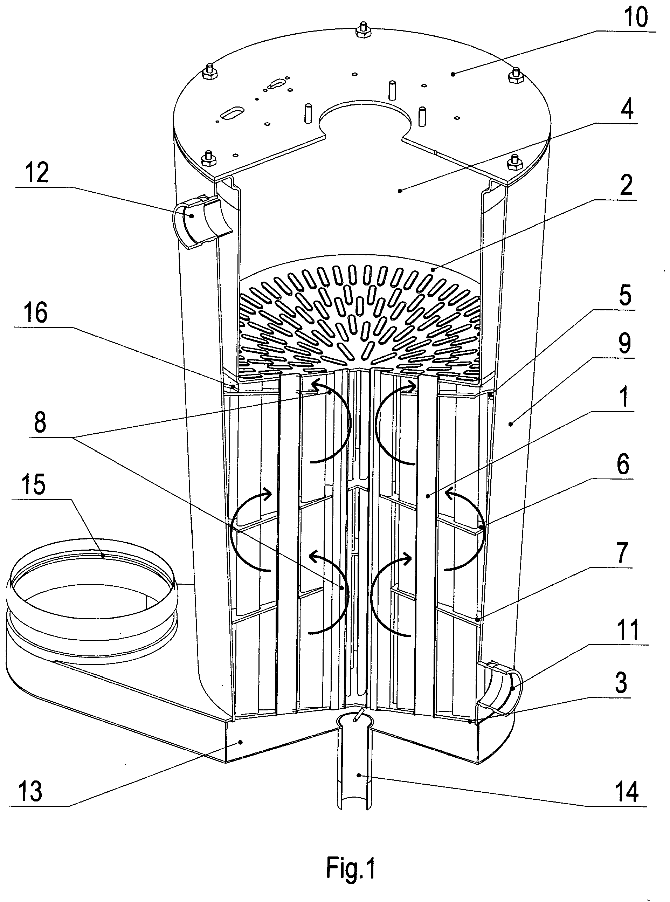

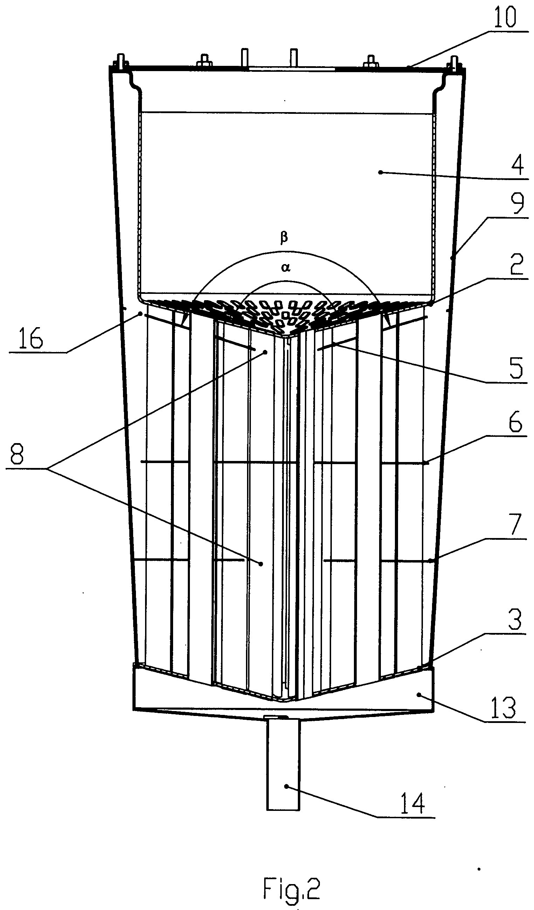

One embodiment of a heat exchanger according to this invention is shown in a drawing in which Fig. 1 shows the inside of the heat exchanger, and Fig. 2 shows the longitudinal section of the exchanger.

The heat exchanger is built up of a vertical set of rectangular in their section pipe elements 1 in a radiant arrangement, ends of said elements being connected from the upper side to the upper sieve wall and from the lower side to a lower sieve wall 3 by using welding techniques. The upper and lower sieve walls 2, 3 have the same shape of the first cone having its vertex directed downwards. A flare angle α of the first cone equals approximately 150°. A cylindrical combustion chamber 4 made of metal sheet is located above the upper sieve wall 2 and is connected by welding with said sieve wall 2. Three horizontal partitions 5, 6, 7 are mounted across the set of pipe elements. These partitions 5, 6, 7 have a row of openings corresponding to the section of pipe elements 1, which are going through these openings. The upper partition 5 is shaped as the second cone having its vertex directed downwards. The flare angle β of this second cone is smaller than the flare angle of the first cone, and equals approximately 130°. The middle partition 6 and the lower partition 7 are shaped as flat discs. A big central opening 8 is located in the middle part of the upper partition 5 and of the lower partition 7. A package made up of a set of pipe elements 1, sieve walls 2, 3, partitions 5, 6, 7, and a cylindrical combustion chamber 4 is enclosed in the outside jacket 9 shaped as a truncated cone with its diameter increasing upwards. The upper partition 5 and the lower partition 7 have their outer diameters corresponding to the inner diameters of the outer jacket 9, whereas the middle partition 6 has its outer diameter smaller than the inner diameter of the outer jacket 9 at the height of said partition. The exchanger is closed from its upper side by a cover 10 provided with a gas inlet stub pipe, an opening for a burner with a valve-ventilation system, as well as other elements essential for assembling the fittings and the housing of a boiler comprising said heat exchanger. The lower sieve wall 3 is connected permanently to the inner jacket 9 by welding in joint places. The cover 10 is connected separatably by means of screws with the outer jacket 9 and with the combustion chamber 4. The water inlet stub pipe 11 and water outlet stub pipe 12 are situated respectively in the lower side and the upper side of the outer jacket 9, and the lower tank 13 is made under the lower sieve wall. The condensate outlet stub pipe 14 and the exhaust fumes outlet stub pipe 15 are located in this tank 13. In the advantageous embodiment of the exchanger its upper partition 5 has a series of additional openings 16 evenly arranged on a circle between the set of pipe elements 1.

The exchanger is destined to burn natural gas and propane in order to achieve heat needed to warm up water used in central heating systems. Gas is burnt in the upper part of the exchanger in the combustion chamber 4, and then combustion fumes flow by the pipe elements 1 vertically downwards to transfer heat into the water being heated, circulating in the outer jacket 9 between the water inlet 11 and the water outlet 12. Flowing down combustion fumes are cooled below their dew-point, and are gathered in the lower tank 13. From here they flow outside together with the rest of the condensate through the condensate outlet 14 and the combustion fumes outlet 15. The heated water flows outside the pipe elements 1 in counterflow to the combustion fumes, that means water is introduced by the water inlet stub pipe 11 situated in the lower part of the exchanger, and flows upwards washing the pipe elements 1 and the combustion chamber 4, and then it is carried out from the exchanger by means of the water outlet stub pipe 12 located in the upper part of the exchanger. The pipe elements 1 and the combustion chamber 4 are suitably washed, said washing being forced by a set of partitions, whereas the flow is directed through the central opening 8 made in the lower partition 7 to the central part of the exchanger and then to walls of the outer jacket 9 around the outer edges of the middle partition 6, and afterwards once more to the middle point from which a flow is directed through the central opening 8 made in the upper partition 5 to the central point of the upper sieve wall 2. In the result this wall is together with the combustion chamber washed evenly in all directions. Water trapped in dead areas below the upper partition 5 flows through the additional openings 16 in this partition.

In the exemplary embodiment the exchanger comprises 20 pipe elements, its height amounts approximately 600 mm, the diameter in its upper part is approximately 350 mm, and the diameter in the lower part as well as the diameter of the combustion chamber are approximately 300 mm. This exchanger ensures the maximum outlet water temperature approximately 90°C.

In other embodiments of the invention a heat exchanger having an upper cone sieve wall and an upper cone partition may comprise a different number of other partitions having an alternately differing outer diameters and being alternately provided with great central openings. In an advantageous embodiment the lower sieve wall is a cone wall shaped exactly in the same way as a cone of the upper sieve wall, but in other embodiments of the exchanger these cones may have different flare angles and the lower sieve wall may be flat or may be shaped in another way. Sections and arrangement of pipe elements in the exchanger may be different too.

Shapes of the upper and lower sieve wall 2, 3, and a shape of the upper partition 5, as well as alternately changing outer diameters of said partitions and shapes of corresponding central openings 8 in the partitions make an unusually advantageous water circulation in the exchanger, increasing its heat exchange efficiency. The increased flow speed of the liquid washing the upper sieve wall and the combustion chamber in the area of the combustion chamber thanks to a new shape of the upper sieve wall 2 and the upper partition 5, and especially thanks to a difference between the flare angle of the first cone forming the upper sieve wall and the second cone creating the upper partition has especially advantageous influence increasing the heat exchange efficiency in the region of the combustion chamber. Additional openings 16 in the upper partition 5 prevent creation of so called dead zones under the partition with no movements of water by allowing a controlled flow, that means a liquid leakage between areas under the partition and above the partition in the determined places.

## Claims

1. A heat exchanger comprising an outer jacket (9) with an inner set of vertical pipe elements (1) fastened at their ends on both sides in sieve walls (2,3), and having a gas combustion chamber (4) located above an upper sieve wall (2), as well as partitions (5,6,7) mounted crosswise to pipe elements (1), said partitions (5,6,7,) having openings for pipe elements, whereas said heat exchanger is provided with liquid, gas and exhaust fumes inlet and outlet stub pipes (11,12,14,15), **characterized in that** said outer jacket (9) is conical with its diameter increasing upwards, and an upper sieve wall (2) as well as an upper partition (5) situated below said wall are shaped as cones with their vertexes pointing down, said upper partition (5) having a central opening (8) in its central part and its outer diameter corresponding to a diameter of the outer jacket (9).

2. The heat exchanger according to Claim 1, **characterized in that** a flare angle (α) of a first cone, forming an upper sieve wall (2), is greater than a flare angle (β) of a second cone, forming an upper partition (5).

3. The heat exchanger according to Claim 2, **characterized in that** a flare angle (β) forming an upper partition (5) is not smaller than 90° and not greater than 170°.

4. The heat exchanger according to Claim 1 - 3, **characterized in that** a lower sieve wall (3) is shaped as a cone having its vertex directed downwards.

5. The heat exchanger according to Claim 4, **characterized in that** cones of the upper and lower sieve walls (2, 3) have the same flare angles (α).

6. The heat exchanger according to Claim 1 - 5, **characterized in that** successive partitions (5,6,7) have alternately an outer diameter corresponding to a diameter of the outer jacket (9) and smaller than a diameter of the outer jacket (9), whereas the partitions with an outer diameter corresponding to a diameter of the outer jacket (9) have a central openings (8) in their central parts.

7. The heat exchanger according to Claim 1 - 6, **characterized in that** the upper partition (5) has evenly distributed additional openings (16).

8. The heat exchanger according to Claim 7, **characterized in that** the additional openings (16) are arranged on one circle or on many concentric circles.

## Patentansprüche

1. Wärmetauscher mit Außenmantel (9), in welchem vertikale Rohrelemente (1) vorhanden sind, die an ihren Enden auf beiden Seiten an Siebwänden (2, 3) befestigt sind, mit einer Gasbrennkammer (4) oberhalb der oberen Siebwand (2) und mit Trennwänden (5, 6, 7) mit Öffnungen für die Rohrelemente quer zu den Rohrelementen sowie mit Ein- und Auslassstutzen für Flüssigkeiten, Gas und Abgas, **dadurch gekennzeichnet, dass** der Außenmantel (9) eine Kegelform aufweist, deren Durchmesser nach oben größer wird und die obere Siebwand (2) und die darunter angebrachte Trennwand (5) die Form eines Kegels aufweisen, dessen Spitze nach unten zeigt, wobei die obere Trennwand (5) eine zentrale Öffnung (8) in ihrem mittleren Bereich aufweist, deren Durchmesser dem Durchmesser des Außenmantels (9) entspricht.

2. Wärmetauscher nach Anspruch 1, **dadurch gekennzeichnet, dass** der Öffnungswinkel des ersten Kegels (α), der die obere Siebwand (2) umfasst, größer ist als der Öffnungswinkel des zweiten Kegels (β), der die obere Trennwand (5) umfasst.

3. Wärmetauscher nach Anspruch 2, **dadurch gekennzeichnet, dass** der Öffnungswinkel des zweiten Kegels (β), der die obere Trennwand (5) umfasst, nicht kleiner als 90° und nicht größer als 170° ist.

4. Wärmetauscher nach Ansprüchen 1 bis 3, **dadurch gekennzeichnet, dass** die untere Siebwand (3) die Form eines Kegels mit einer nach unten zeigenden Spitze ausweist.

5. Wärmetauscher nach Anspruch 4, **dadurch gekennzeichnet, dass** die Kegel der oberen und unteren Siebwand (2, 3) gleiche Öffnungswinkel aufweisen.

6. Wärmetauscher nach Ansprüchen 1 bis 5, **dadurch gekennzeichnet, dass** die weiteren Trennwände (5, 6, 7) abwechselnd Außendurchmesser aufweisen, welche dem Durchmesser des Außenmantels (9) entsprechen oder kleiner als der Durchmesser des Außenmantels (9) sind, wobei die Trennwände mit dem dem Durchmesser des Außenmantels (9) entsprechenden Durchmesser über eine zentrale Öffnung (8) im mittleren Bereich verfügen.

7. Wärmetauscher nach Ansprüchen 1 bis 6, **dadurch gekennzeichnet, dass** die obere Trennwand (5) gleichmäßig angeordnete Zusatzöffnungen (16) aufweist.

8. Wärmetauscher nach Ansprüchen 7, **dadurch gekennzeichnet, dass** die Zusatzöffnungen (16) auf einem Kreis oder mehreren konzentrischen Kreisen angeordnet sind.

## Revendications

1. L'échangeur de chaleur comprenant une enveloppe extérieure (9) à l'intérieur duquel se trouve un jeu d'éléments tubulaires verticaux (1) fixés à ses extrémités des deux côtés dans des plaques tubulaires (2, 3) et muni d'une chambre de combustion du gaz (4) située au-dessus de la plaque tubulaire supérieure (2) et ayant des cloisons (5, 6, 7) avec des orifices pour les éléments tubulaires montées à travers les éléments tubulaires et pourvu de tubulures d'entrée et de sortie des liquides, de gaz et de gaz de combustion, **caractérisé en ce que** l'enveloppe extérieure (9) a une forme conique avec un diamètre croissant vers le haut, et la plaque tubulaire supérieure (2) et la cloison supérieure (5) disposé en dessous d'elle ont une forme conique avec des pointes orientées vers le bas, la cloison supérieure (5) ayant un orifice central (8) dans sa partie centrale et le diamètre extérieur correspondant au diamètre de l'enveloppe extérieure (9).

2. L'échangeur selon la revendication 1, **caractérisé en ce que** l'angle d'ouverture du premier cône (α) décrivant la plaque tubulaire supérieure (2) est plus grand à l'angle d'ouverture du second cône (β) décrivant la cloison supérieure (5).

3. L'échangeur selon la revendication 2, **caractérisé en ce que** l'angle d'ouverture du second cône (β) décrivant la cloison supérieure (5) n'est pas inférieur à 90° et non supérieur à 170°.

4. L'échangeur selon la revendication 1 à 3, **caractérisé en ce que** la plaque tubulaire inférieure (3) a la forme d'un cône dont la pointe est dirigée vers le bas.

5. L'échangeur selon la revendication 4 **caractérisé en ce que** les cônes des plaques tubulaires supérieure et inférieure (2, 3) ont des angles d'ouverture identiques.

6. L'échangeur selon la revendication 1 à 5, **caractérisé en ce que** les cloisons suivantes (5, 6, 7) ont alternativement le diamètre extérieur correspondant au diamètre de l'enveloppe extérieure (9) et inférieur au diamètre de l'enveloppe extérieure (9), lesdites cloisons ayant un diamètre extérieur correspondant au diamètre de l'enveloppe extérieure (9) ont un orifice central (8) dans la partie centrale.

7. L'échangeur selon la revendication 1 à 6, **caractérisé en ce que** la cloison supérieure (5) comporte des orifices supplémentaires (16) régulièrement disposés.

8. L'échangeur selon la revendication 7, **caractérisé en ce que** les orifices supplémentaires (16) sont disposées sur un ou plusieurs cercles co-concentriques.
